# EUROPÄISCHE PATENTSCHRIFT

(11) **EP 0 943 722 B1**
(45) Veröffentlichungstag und Bekanntmachung des Hinweises auf die Patenterteilung: **12.11.2003**
(21) Anmeldenummer: 99105391.9
(22) Anmeldetag: 16.03.1999
(51) Int. Cl.: D06F 93/00, D06F 39/00

(54) **Vorrichtung und Verfahren zum Bereitstellen eines Transponders**
Device and process for preparation of a transponder
Dispositif et procédé pour la préparation d'un transpondeur

(30) Priorität: 17.03.1998 DE 19811583
(43) Veröffentlichungstag der Anmeldung: 22.09.1999
(73) Patentinhaber: BSH Bosch und Siemens Hausgeräte GmbH, 81669 München (DE)
(72) Erfinder: Wöbkemeier, Martina, Dr.-Ing., 10789 Berlin (DE)

(56) Entgegenhaltungen:
- EP-A- 0 620 537
- DE-A- 4 309 914
- DE-U- 29 610 968
- US-A- 4 550 246
- US-A- 5 715 555
- PATENT ABSTRACTS OF JAPAN vol. 097, no. 007, 31. Juli 1997 -& JP 09 062817 A (OMRON CORP), 7. März 1997

## Beschreibung

Die vorliegende Erfindung betrifft ein Verfahren und eine Vorrichtung zum Bereitstellen eines Transponders für die Kennzeichnung eines textilen Gutes betreffend das Waschen und/oder Trocknen des textilen Gutes, wobei der Transponder Informationen enthält, die für das Waschen und/oder Trocknen des textilen Gutes relevant sind.

Eine Vorrichtung und ein Verfahren gemäß des Oberbegriffs des Anspruchs 1 bzw. 9, bzw. 10, sind aus dem Dokument EP-A-0 620 537 bekannt.

Beim Trocknen und insbesondere beim Waschen von textilen Gütern durch Haushaltgeräte müssen die Eigenschaften der zu behandelnden Güter bei der Wahl der Behandlungsart berücksichtigt werden. So ist das zutreffende am Wasch- und/oder Trockengerät einzustellende Programm von den Eigenschaften der Wäschestücke abhängig, die gewaschen und/oder getrocknet werden sollen. Für die Programmwahl maßgebliche Eigenschaften sind beispielsweise die Gewebeart, die Farbe oder die maximale Waschtemperatur. Zusätzlich können für Wäschestücke Pflegeeinschränkungen gelten, z.B., daß diese nicht geschleudert werden dürfen.

Alle diese für das Waschen und/oder Trocknen von textilen Gütern wichtigen Informationen werden bislang auf Etiketten oder Gewebestreifen in Form von Pflegekennzeichen angebracht, die am textilen Gut an unauffälliger Stelle befestigt werden. Vor dem Waschen undloder Trocknen müssen diese Informationen von dem Pflegekennzeichen abgelesen werden und das zutreffende Programm zum Waschen und/ oder Trocknen eingestellt werden. Eine weitere Möglichkeit, ein textiles Gut mit den für das Waschen und/oder Trocknen relevanten Informationen zu versehen, ist die Kennzeichnung mit einem Transponder.

Dazu wird am textilen Gut ein Transponder befestigt, der die für das Waschen und/ oder Trocknen relevanten Informationen trägt. Mittels bestimmter elektromagnetischer Signale wird der elektronische Schaltkreis im Transponder veranlaßt, die gespeicherten Informationen auszusenden. In diesem Fall ist beispielsweise die Maschine zum Waschen und/oder Trocknen mit einer Lesevorrichtung ausgerüstet, die mittels bestimmter elektromagnetischer Signale den Transponder veranlaßt, die in ihm gespeicherten Informationen auszusenden. Diese werden dann von der Leseeinrichtung empfangen und an die Steuereinheit des Wasch- oder Trockengerätes weitergeleitet, die selbsttätig aufgrund der empfangenen Informationen über die zu behandelnden textilen Güter das zutreffende Pflegeprogramm einstellt.

Um das textile Gut mit einem Transponder zu kennzeichnen, ist es nötig, zunächst die genauen Informationen über das textile Gut zu bestimmen und entsprechend dieser Informationen einen Transponder bereitzustellen, der die für das Waschen und/ oder Trocknen dieses textilen Gutes relevanten Daten enthält. Dabei stellt sich zuerst das Problem, die korrekten Informationen über das textile Gut zu bestimmen. In der Regel müssen diese Informationen dem Pflegekennzeichen entnommen werden, da sie durch bloßes Betrachten oder Befühlen des textilen Gutes nicht oder nur unsicher gewonnen werden können. Auf den Pflegekennzeichen sind die Informationen üblicherweise in codierter Form enthalten, beispielsweise in Form von Bildsymbolen oder Zahlen, so daß beim Interpretieren der abgelesenen Zeichen bereits Fehler auftreten können. Darüber hinaus wird das Pflegen von textilem Gut in der Regel von Personen durchgeführt, die auf dem Gebiet der Textiltechnik Laien sind, die solche Symbole für die Pflegekennzeichen möglicherweise nicht kennen. Es besteht somit eine erhebliche Unsicherheit beim Bestimmen der korrekten Informationen über das zu pflegende textile Gut.

Anschließend muß entsprechend der bestimmten Informationen der richtige Transponder mit den für das Waschen und/oder Trocknen relevanten Daten bereitgestellt werden. Auch hier können weitere Fehler auftreten. So sind Transponder in der Regel kleine elektronische Bauelemente, die unabhängig von den gespeicherten Daten gleich aussehen können, was die Fehlerwahrscheinlichkeit beim Zuordnen des richtigen Transponders zu den entsprechenden Daten weiter erhöht.

Der vorliegenden Erfindung liegt daher die Aufgabe zugrunde, eine Vorrichtung und ein Verfahren zum Bereitstellen eines Transponders für die Kennzeichnung eines textilen Gutes betreffend das Waschen und/oder Trocknen des textilen Gutes zu schaffen, wobei ein Transponder für die Kennzeichnung eines textilen Gutes bereitgestellt und ausgegeben werden soll, der sicher und zuverlässig die für das Waschen und/oder Trocknen des textilen Gutes zutreffenden Informationen enthält.

Diese Aufgabe wird durch die Merkmale des Kennzeichnungsteils des Anspruchs 1 bzw. der Ansprüche 9 und/ oder 10 gelöst.

Dadurch, daß die Vorrichtung Leseeinrichtungen aufweist, mit denen sie die Informationen über das textile Gut erfassen kann, werden diese Informationen sicher bestimmt und die Möglichkeit eines menschlichen Fehlers vermieden. Darüber hinaus können diese Leseeinrichtungen auch so ausgestattet sein, daß sie viele verschiedene und auch dem Laien unbekannte Kennzeichnungsmittel auslesen können, so daß auch textile Güter gekennzeichnet werden können, die die Informationen nur in einer dem Benutzer unbekannten Form enthalten. Durch die automatische Ausgabe des richtigen Transponders mittels der Ausgabevorrichtung wird weiterhin die Möglichkeit eines Fehlers beim Auswählen des richtigen Transponders sicher vermieden.

Vorteilhafterweise weist die Vorrichtung eine Codiereinrichtung auf, die die den eingelesenen Informationen entsprechenden für das Waschen und/oder Trocknen des textilen Gutes relevanten Informationen in einen codierbaren Transponder übertragen. Für den Betrieb der Vorrichtung sind in diesem Fall nur Transponder einer Art nötig, die uncodiert sind und in die jeweils die für das jeweilige textile Gut relevanten Daten geschrieben werden. Dadurch wird der Betrieb und insbesondere das Nachfüllen verbrauchter Transponder vereinfacht. Dabei ist es denkbar, daß die codierten Transponder mit einer äußerlich erkennbaren Marke versehen werden, um die codierten von den uncodierten Transpondem visuell unterscheiden zu können.

Für die Bereitstellung des richtigen Transponders ist es alternativ auch möglich, daß die Vorrichtung eine Transponderspeichereinrichtung aufweist, die beispielsweise in getrennten Magazinen verschieden codierte Transponder enthält, aus denen durch Stellglieder ein Transponder ausgewählt wird. Entsprechend der eingelesenen Informationen wird der geeignete Transponder aus einer Mehrzahl von Transpondern ausgewählt, die für die Kennzeichnung von verschiedenen textilen Gütem geeignet sind.

Vorteilhafterweise sind die Leseeinrichtungen derart ausgebildet, daß sie Informationen über das textile Gut aus Pflegekennzeichen und/oder aus Etiketten mit Bildern, Piktogramm, Strich- oder Zahlencodes und/oder aus Transpondem auslesen können. Dadurch wird erreicht, daß die Informationen aus vielen verschiedenen Kennzeichnungsmitteln erfaßt werden können. Dabei ist auch denkbar, die Informationen aus verschiedenen Quellen einzulesen, um sie durch Vergleich zu überprüfen. Neben den heutzutage bereits üblichen Pflegekennzeichen mit Bilder- und Zahlencodes ist es auch denkbar, daß textile Güter vom Hersteller mit einem Transponder gekennzeichnet werden, der jedoch nicht die für das Waschen und/oder Trocknen relevanten Daten sondern bestimmte Angaben des Herstellers enthält. In einem solchen Fall werden die Herstellerdaten ausgelesen und entsprechend diesen Daten ein Transponder bereitgestellt, der die für das Waschen und/oder Trocknen relevanten Daten enthält.

Zum Erfassen der Informationen können die Leseeinrichtungen aus einem Kamerasystem und/oder einem Strichcodeleser und/oder einem Scanner und/oder einem Transponderlesegerät ausgebildet sein. Damit wird sichergestellt, daß die Informationen aus verschiedenartigen Kennzeichnungsmitteln, seien es einfache Etiketten oder Transponder, eingelesen können.

In einer vorteilhaften Ausführungsform weist die Vorrichtung weiterhin Einrichtungen zum Befestigen des bereitgestellten Transponder am zu kennzeichnenden textilen Gut auf. Da in der Regel zum Kennzeichnen des textilen Gutes der bereitgestellte Transponder am Gut befestigt wird, muß dieser Arbeitsgang in der Regel ohnehin durchgeführt werden. Durch die Befestigung des Transponders mittels der erfindungsgemäßen Vorrichtung zum Bereitstellen des Transponders wird so ein zeitlicher und praktischer Vorteil erzielt, weil der Benutzer in einem Arbeitsgang den richtigen Transponder auswählen und am Gut anbringen kann. Separate Anbringungstätigkeiten entfallen.

Die Befestigungseinrichtungen können im wesentlichen zangenartig sein. Auf diese Weise läßt sich am in der Regel flächigen textilen Material der Transponder besonders einfach und sicher befestigen. Die Zangen können ähnlich jenen bei einer Druckknopfanbringung ausgebildet sein.

Vorteilhafterweise sind die Leseeinrichtungen und die Befestigungseinrichtungen nahe beieinander angeordnet, so daß der Transponder nahe am Kennzeichnungsmittel am textilen Gut befestigt werden kann. Da die Kennzeichnungsmittel in der Regel am textilen Gut versteckt angebracht sind, ergibt sich daraus, daß auch der Transponder an einer unauffälligen Stelle befestigt wird und nicht optisch unangenehm auffällt.

Neben der erfindungsgemäßen Vorrichtung betrifft die Erfindung auch ein Verfahren zum Bereitstellen eines Transponders für die Kennzeichnung eines textilen Gutes betreffend das Waschen und/oder Trocknen des textilen Gutes mit den folgenden Schritten:
- Einlesen von Informationen über das textile Gut aus Kennzeichnungsmitteln. die an diesem angebracht sind,
- entsprechend der eingelesenen Informationen, Auswahl eines Transponders, der die für das Waschen und/oder Trocknen des textilen Gutes relevanten Informationen enthält, aus einer Mehrzahl von Transpondern, die für die Kennzeichnung von verschiedenen textilen Gütern geeignet ist, und
- Ausgabe des ausgewählten oder codierten Transponders.

In einer alternativen Ausführungsform des erfindungsgemäßen Verfahren sind zum Bereitstellen eines Transponders für die Kennzeichnung eines textilen Gutes betreffend das Waschen und/oder Trocknen des textilen Gutes die folgenden Schritte vorgesehen:
- Einlesen von Informationen über das textile Gut aus Kennzeichnungsmitteln, die an diesem angebracht sind,
- entsprechend der eingelesenen Informationen, Übertragung der für das Waschen und/oder Trocknen des textilen Gutes relevanten Informationen in einen codierbaren Transponder, und
- Ausgabe des ausgewählten oder codierten Transponders.

Weitere Einzelheiten, Merkmale und Vorteile der vorliegenden Erfindung ergeben sich aus der nachfolgenden Beschreibung eines Ausführungsbeispiels unter Bezugnahme auf die beigefügten Zeichnungen. Darin zeigen
- Fig. 1: die erfindungsgemäße Vorrichtung in einer perspektivischen Darstellung,
- Fig. 2: ein zu kennzeichnendes textiles Gut mit einem Gewebestreifen für Pflegekennzeichen,
- Fig. 3: die erfindungsgemäße Vorrichtung und einen Teil des textilen Gutes mit dem Gewebestreifen während der Erfassung der Pflegekennzeichen über das textile Gut, und
- Fig. 4: die erfindungsgemäße Vorrichtung mit einem Teil des textilen Gutes während des Befestigens des Transponders am textilen Gut.

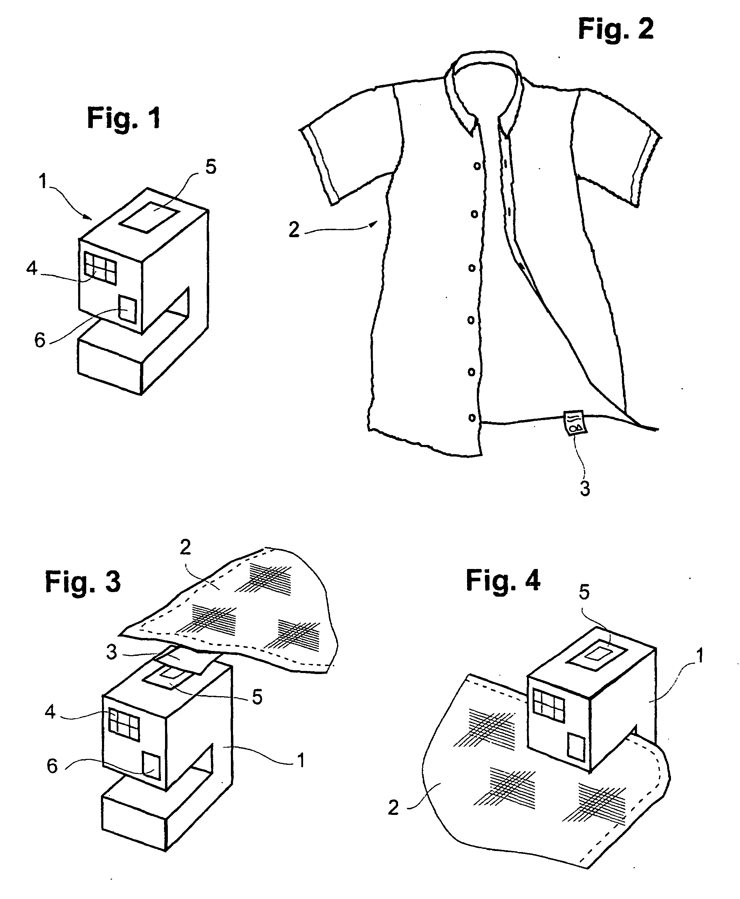

Die in Fig. 1 dargestellte erfindungsgemäße Vorrichtung 1 ist im Beispielsfalle als Standgerät konzipiert, das kurz oberhalb des Fußes einen waagerechten Schlitz aufweist, in den flächige Gegenstände wie beispielsweise das zu kennzeichnende textile Gut 2 eingeführt werden können. An der Vorderseite der Vorrichtung 1 befinden sich oberhalb der Mündung des Schlitzes Bedienelemente 4 sowie eine Ausgabevorrichtung 6, mittels der Transponder ausgegeben werden können. Auf der Oberseite der Vorrichtung 1 ist ein Einlesefeld 5 zum optischen Erfassen der Informationen über das textile Gut angeordnet.

Ferner enthält die erfindungsgemäße Vorrichtung 1 einen Vorrat von uncodierten Transpondem (nicht dargestellt), in die eine ebenfalls in der Vorrichtung 1 enthaltene Codiereinheit Daten einzeln übertragen kann, d. h. die uncodierten oder unprogrammierten Transponder einzeln codieren kann.

Fig. 2 zeigt beispielsweise ein zu behandelndes textiles Gut 2, im gezeigten Fall ein Hemd, an dem am unteren Innenrand ein Gewebestreifen 3 mit Pflegekennzeichen angebracht ist. Diese sind übliche Symbole und Angaben als Informationen über das textile Gut 2. Zum Kennzeichnen dieses textilen Gutes 2 müssen zunächst anhand der Symbole auf dem Gewebestreifen 3 die korrekten Informationen über das textile Gut 2 bestimmt werden.

Dazu wird der Gewebestreifen 3 auf das Einlesefeld 5 der erfindungsgemäßen Vorrichtung 1 gelegt. Der Einlesevorgang wird über die Bedienelemente 4 gestartet. Zunächst wird das optische Abbild der Symbole und Angaben des Gewebestreifens 3 eingelesen. Durch geeignete Datenverarbeitungsverfahren werden aus diesen Bilddaten mittels Text- beziehungsweise Bilderkennung die Informationen über das textile Gut 2 gewonnen. In einem nächsten Schritt werden diese Informationen an die Codiereinheit weitergeleitet. In einem weiteren Schritt codiert nun die Codiereinrichtung einen unprogrammierten Transponder mit den für das Waschen und/oder Trocknen relevanten Daten entsprechend den zuvor eingelesenen Informationen über das textile Gut 2.

Der so mit den zutreffenden Daten versehene Transponder kann wahlweise sofort mittels der Ausgabevorrichtung 6 in einem entsprechenden Fach ausgegeben werden oder einer Befestigungseinrichtung zugeführt werden. Im ersten Fall kann der Transponder vom Benutzer dem Ausgabefach 6 entnommen und selbst am textilen Gut 2 befestigt werden. Um den codierten Transponder mittels der in der Vorrichtung 1 integrierten Befestigungseinrichtung am textilen Gut 2 anzubringen, wird gemäß Fig. 4 das textile Gut 2 mit der Stelle, an der der Transponder befestigt werden soll, in den Schlitz eingeführt. Vorzugsweise wählt man dazu eine unauffällige Stelle, um das Aussehen des textilen Gutes nicht zu beeinträchtigen. Schließlich wird durch Betätigen des entsprechenden Bedienelementes 4 der Transponder am textilen Gut 2 befestigt.

Somit wird durch die erfindungsgemäße Vorrichtung ein Transponder bereitgestellt, der sicher und zuverlässig die für das Waschen oder Trocknen eines textilen Gutes 2 relevanten Informationen enthält, wobei die Fehlermöglichkeiten, insbesondere durch unkundige Benutzer, ausgeschlossen werden.

Die vorliegende Erfindung ist nicht auf das dargestellte Ausführungsbeispiel beschränkt. So ist es auch denkbar, daß Scannersysteme oder ähnliche Einrichtungen die Informationen nicht nur von den Kennzeichnungsmitteln ablesen, die zu diesem Zweck am textilen Gut befestigt sind, sondern das textile Gut direkt erfassen und analysieren. Auch kann der Transponder, um besser am textilen Gut befestigbar zu sein, in der Form von Druckknöpfen ausgebildet sein, die einfach mit einer Einpreßvorrichtung am Gewebe festgedrückt werden. Alternativ kann der Transponder auch vorteilhafterweise mittels eines Heftriegels am textilen Gut festgenäht werden. Auch ist es denkbar, Transponder zu verwenden, an denen ein Gewebeabschnitt befestigt ist. Mittels dieses Gewebeabschnittes könnte der Transponder einfach und sicher durch Nähen am textilen Gut befestigt werden.

## Patentansprüche

1. Vorrichtung (1) zum Bereitstellen eines Transponders für die Kennzeichnung eines textilen Gutes (2) betreffend das Waschen und/oder Trocknen des textilen Gutes (2), wobei die Vorrichtung Leseeinrichtungen (5) aufweist, mittels derer sie Informationen über das textile Gut aus Kennzeichnungsmitteln (3) erfasst, die am Gut angebracht sind, **dadurch gekennzeichnet dass** die Vorrichtung entsprechend der eingelesenen Informationen einen Transponder bereitstellt, der die für das Waschen und/oder Trocknen des textilen Gutes (2) relevanten Informationen enthält, und eine Ausgabevorrichtung zur Ausgabe des bereitgestellten Transponders aufweist.

2. Vorrichtung nach Anspruch 1, **dadurch gekennzeichnet, daß** sie Codiereinrichtungen aufweist, die die den eingelesenen Informationen entsprechenden, für das Waschen und/oder Trocknen des textilen Gutes (2) relevanten Informationen in einen codierbaren Transponder übertragen.

3. Vorrichtung nach Anspruch 1, **dadurch gekennzeichnet, daß** sie eine Transponderspeichereinrichtung aufweist, in Abhängigkeit von den eingelesenen Informationen zur Auswahl eines geeigneten Transponders aus einer Mehrzahl von Transpondem eingerichtet ist, die für die Kennzeichnung von verschiedenen textilen Gütern (2) geeignet sind, und nach der Auswahl zur Ausgabe des gewählten Transponders mittels der Ausgabevorrichtung ausgestattet ist.

4. Vorrichtung nach einem der Ansprüche 1 bis 3, **dadurch gekennzeichnet, daß** die Leseeinrichtungen (5) zum Lesen von auf Kennzeichnungsmitteln wie Etiketten (3) oder Textilstreifen angebrachten Informationen über das textile Gut in Form von aus Bilder-, Piktogramm-, Strich- oder Zahlencodes und/oder aus Transpondem dargestellten Pflegekennzeichen (3) eingerichtet sind.

5. Vorrichtung nach einem der Ansprüche 1 bis 4, **dadurch gekennzeichnet, daß** die Leseeinrichtungen (5) aus einem Kamerasystem und/oder einem Strichcodeleser und/oder einem Scanner (5) und/oder einem Transponderlesegerät gebildet sind.

6. Vorrichtung nach einem der Ansprüche 1 bis 5, **dadurch gekennzeichnet, daß** sie Einrichtungen zum Befestigen des bereitgestellten Transponders am zu kennzeichnenden textilen Gut (2) aufweist.

7. Vorrichtung nach Anspruch 6, **dadurch gekennzeichnet, daß** die Befestigungseinrichtung im wesentlichen zangenartig ist.

8. Vorrichtung nach Anspruch 6 oder 7, **dadurch gekennzeichnet, daß** die Leseeinrichtungen und die Befestigungseinrichtungen nahe beieinander angeordnet sind, so daß der Transponder nahe am Kennzeichnungsmittel (3) am textilen Gut (2) befestigt werden kann.

9. Verfahren zum Bereitstellen eines Transponders für die Kennzeichnung eines textilen Gutes (2) betreffend das Waschen und/oder Trocknen des textilen Gutes (2), das den Schritt vom:
- Einlesen von Informationen über das textile Gut (2) aus Kennzeichnungsmitteln (3), die an diesem befestigt sind,
aufweist, **dadurch gekennzeichnet dass** das Verfahren die folgenden Schritte weiter aufweist:
- entsprechend der eingelesenen Informationen Auswahl eines Transponders, der die für das Waschen und/oder Trocknen des textilen Gutes (2) relevanten Informationen enthält, aus einer Mehrzahl von codierten Transpondem, die für die Kennzeichnung von verschiedenen textilen Gütern (2) geeignet sind, und
- Ausgabe des codierten Transponders.

10. Verfahren zum Bereitstellen eines Transponders für die Kennzeichnung eines textilen Gutes (2) betreffend das Waschen und/oder Trocknen des textilen Gutes (2), das den Schritt vom:
- Einlesen von Informationen über das textile Gut (2) aus Kennzeichnungsmitteln (3), die an diesem befestigt sind,
aufweist, darduch **gekennzeichnet** dass das Verfahren die folgenden Schritte weiter aufweist:
- entsprechend der eingelesenen Informationen Übertragung der für das Waschen und/oder Trocknen des textilen Gutes (2) relevanten Informationen in einen codierbaren Transponder, und
- Ausgabe des codierten Transponders.

## Claims

1. Device (1) for provision of a transponder for characterisation of a textile article (2) with respect to washing and/or drying the textile article (2), wherein the device comprises readers (5) by means of which it detects data concerning the textile article from characterisation means (3) mounted at the article, **characterised in that** the device provides, in correspondence with the read data, a transponder which contains data relevant for the washing and/or drying of the textile (2), and comprises a delivery device for issue of the provided transponder.

2. Device according to claim 1, **characterised in that** it comprises coders which transfer data, which correspond with the read data and are relevant for washing and/or drying the textile article (2), to a codable transponder.

3. Device according to claim 1, **characterised in that** it comprises a transponder store, is equipped for selection, in dependence on the read data, of an appropriate transponder from a plurality of transponders which are suitable for characterisation of different textile articles (2) and is equipped for issue, after the selection, of the selected transponder by means of the delivery device.

4. Device according to one of claims 1 to 3, **characterised in that** the readers (5) are equipped for reading data, which is applied to characterisation means such labels (3) or textile strips, concerning the textile product and in the form of care markings (3) represented by pictorial, pictogram, bar or numerical codes and/or by transponders.

5. Device according to one of claims 1 to 4, **characterised in that** the readers (5) are formed by a camera system and/or a bar-code reader and/or a scanner (5) and/or a transponder reading apparatus.

6. Device according to one of claims 1 to 5, **characterised in that** it comprises equipment for fastening the provided transponder to the textile article (2) to be **characterised.**

7. Device according to claim 6, **characterised in that** the fastening equipment is substantially pincer-like.

8. Device according to claim 6 or 7, **characterised in that** the readers and the fastening equipment are arranged adjacent to one another so that the transponder can be fastened to the textile article (2) near the characterisation means (3).

9. Method of providing a transponder for characterisation of a textile article (2) with respect to the washing and/or drying of the textile article (2), which comprises the step of
- reading data relating to the textile article (2) from characterisation means (3) fastened thereto,
- **characterised in that** the method further comprises the following steps:
- selection, in correspondence with the read data, of a transponder, which contains data relevant for the washing and/or drying of the textile article (2), from a plurality of coded transponders suitable for characterisation of different textile articles (2), and
- issue of the coded transponder.

10. Method of providing a transponder for characterisation of a textile article (2) with respect to the washing and/or drying of the textile article (2), which comprises the step of
- reading data relating to the textile article (2) from characterisation means (3) fastened thereto,
- **characterised in that** the method further comprises the following steps:
- transfer, i n correspondence with the read data, of the data relevant for washing and/or drying of the textile article (2) to a codable transponder, and
- issue of the coded transponder.

## Revendications

1. Dispositif (1) pour la préparation d'un transpondeur pour le marquage d'un produit textile (2) concernant le lavage et/ou le séchage dudit produit textile (2), ledit dispositif présentant des dispositifs de lecture (5) lui permettant de saisir des informations sur le produit textile, lesquelles sont extraites de moyens de caractérisation (3) fixés au produit, **caractérisé en ce que** le dispositif prépare un transpondeur conformément aux informations lues, lequel contient les informations pertinentes pour le lavage et/ou le séchage du produit textile (2) et **en ce qu'**il présente un dispositif de délivrance pour la délivrance du transpondeur préparé.

2. Dispositif selon la revendication 1, **caractérisé en ce qu'**il présente des dispositifs de codage qui transfèrent dans un transpondeur codable les informations correspondant aux informations lues et pertinentes pour le lavage et/ou le séchage du produit textile (2).

3. Dispositif selon la revendication 1, **caractérisé en ce qu'**il présente un dispositif de stockage de transpondeurs, **en ce qu'**il est aménagé en dépendance des informations lues pour la sélection d'un transpondeur approprié au sein d'une pluralité de transpondeurs propres à marquer différents produits textiles (2) et **en ce qu'**il est équipé suivant la sélection pour la délivrance du transpondeur sélectionné au moyen du dispositif de délivrance.

4. Dispositif selon l'une d es revendications 1 à 3, **caractérisé en ce que** les dispositifs de lecture (5) sont aménagés en vue de la lecture d'informations sur le produit textile appliquées sur des moyens de caractérisation tels que des étiquettes (3) ou des bandelettes de textile sous la forme de codes d'entretien (3) représentés sur la base de codes graphiques, de pictogrammes, de codes barres ou de codes numériques et/ou de transpondeurs.

5. Dispositif selon l'une des revendications 1 à 4, **caractérisé en ce que** les dispositifs de lecture (5) sont constitués d'un système de caméra et/ou d'un lecteur de codes barres et/ou d'un scanner (5) et/ou d'un appareil de lecture de transpondeur.

6. Dispositif selon l'une des revendications 1 à 5, **caractérisé en ce qu'**il présente des dispositifs pour la fixation du transpondeur préparé au produit textile (2) à marquer.

7. Dispositif selon la revendication 6, **caractérisé en ce que** le dispositif de fixation a sensiblement la forme d'une pince.

8. Dispositif selon la revendication 6 ou 7, **caractérisé en ce que** les dispositifs de lecture et les dispositifs de fixation sont placés l'un près de l'autre de sorte que le transpondeur peut être fixé au produit textile (2) à proximité du moyen de caractérisation (3).

9. Procédé pour la préparation d'un transpondeur pour le marquage d'un produit textile (2) concernant le lavage et/ou le séchage dudit produit textile (2), présentant l'étape:
- lecture d'informations sur le produit textile (2) extraites de moyens de caractérisation (3) fixés à celui-ci,
**caractérisé en ce que** ledit procédé présente par ailleurs les étapes suivantes:
- sélection, conformément aux informations lues, d'un transpondeur contenant les informations pertinentes pour le lavage et/ou le séchage du produit textile (2) au sein d'une pluralité de transpondeurs codés propres à marquer différents produits textiles (2) et
- délivrance du transpondeur codé.

10. Procédé pour la préparation d'un transpondeur pour le marquage d'un produit textile (2) concernant le lavage et/ou le séchage dudit produit textile (2), présentant l'étape:
- lecture d'informations sur le produit textile (2) extraites de moyens de caractérisation (3) fixés à celui-ci,
**caractérisé en ce que** ledit procédé présente par ailleurs les étapes suivantes:
- transfert, conformément aux informations lues et dans un transpondeur codable, des informations pertinentes pour le lavage et/ou le séchage du produit textile (2) et
- délivrance du transpondeur codé.
